(19) Europäisches Patentamt
European Patent Office
Office européen des brevets

(11) **EP 4 026 869 A1**

(12) **EUROPEAN PATENT APPLICATION**
published in accordance with Art. 153(4) EPC

(43) Date of publication:
**13.07.2022 Bulletin 2022/28**

(21) Application number: **20860462.9**

(22) Date of filing: **04.09.2020**

(51) International Patent Classification (IPC):
**C08J 3/215** $^{(2006.01)}$       **C08L 1/02** $^{(2006.01)}$
**C08L 101/14** $^{(2006.01)}$

(52) Cooperative Patent Classification (CPC):
**C08J 3/215; C08L 1/02; C08L 101/14**

(86) International application number:
**PCT/JP2020/033674**

(87) International publication number:
**WO 2021/045216 (11.03.2021 Gazette 2021/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.09.2019   JP 2019163118**

(71) Applicant: **Kao Corporation
Chuo-ku
Tokyo 103-8210 (JP)**

(72) Inventors:
• **TAKADA, Yuki
Haga-gun, Tochigi 321-3497 (JP)**
• **KOUTA, Takuya
Haga-gun, Tochigi 321-3497 (JP)**

(74) Representative: **Vossius & Partner
Patentanwälte Rechtsanwälte mbB
Siebertstraße 3
81675 München (DE)**

(54) **WATER-ABSORBENT COMPOSITION AND PRODUCTION METHOD THEREFOR**

(57)    An absorbent composition containing cellulose nanofibers and a water-soluble polymer and having a specific surface area of at least 1.0 m²/g and a method for producing the same. The water-soluble polymer is preferably a cellulose derivative or its salt. The cellulose derivative preferably has a degree of etherification of 1.0 or lower. The absorbent composition is preferably produced by mixing cellulose nanofibers and the water-soluble polymer in a liquid and freeze-drying the resulting mixed solution.

EP 4 026 869 A1

**Description**

Technical Field

The present invention relates to an absorbent composition and a method for producing the same.

Background Art

Cellulose nanofibers are fine fibers produced from pulp and so on and known to involve low environmental burdens in the production and disposal phases and be useful as an absorbent material in absorbent articles, such as diapers. Having high hydrophilicity and good thickening properties, cellulose nanofibers are expected for use in a broad range of fields such as foods, medical products, and coatings. However, dry cellulose nanofibers have low dispersibility in water because of high liability to aggregation. As an approach to solve this problem, patent literature 1 listed below discloses a porous cellulose structure made up of fine cellulose fibers with a specific average fiber diameter and having a specific apparent density. Patent literature 2 proposes a method for producing a porous cellulose structure comprising the step of freeze-drying a liquid mixture containing cellulose nanofibers in a specific solid content and a mixed dispersion medium composed of water and a specific concentration of a water-soluble organic solvent. Patent literature 3 discloses a dry solid comprising anionically modified cellulose nanofibers and a water-soluble polymer added in a specific ratio.

Citation List

Patent Literature

    Patent literature 1: JP 2010-215872A
    Patent literature 2: US 2015/0093560
    Patent literature 3: US 2016/0333116

Summary of Invention

The present invention relates to an absorbent composition. The absorbent composition contains cellulose nanofibers and a water-soluble polymer and has a specific surface area of at least 1.0 $m^2$/g.
The present invention also relates to a method for producing the absorbent composition. The method includes mixing the cellulose nanofibers and the water-soluble polymer in a liquid and freeze-drying the resulting mixed solution.

Description of Embodiments

Cellulose nanofiber is expected to function as an absorbent material in absorbent articles, such as diapers. However, since cellulose nanofiber in a dry state is liable to aggregate and has low dispersibility in water as stated above, the absorption performance of cellulose nanofiber is insufficient due to its low capabilities of soaking up liquid and retaining the liquid absorbed. Patent literatures 1 to 3 do not disclose a cellulose nanofiber-containing composition having sufficient fluid retentivity demanded as the above-mentioned absorbent material.
The present invention relates to an absorbent composition capable of eliminating the disadvantage associated with the aforementioned conventional techniques and a method for producing the same.
The present invention will be described on the basis of its preferred embodiments. The absorbent composition of the present invention (hereinafter also referred to simply as the absorbent composition) contains cellulose nanofibers (hereinafter abbreviated as CNFs) and a water-soluble polymer. A CNF is a fine fiber with a diameter of 3 to 500 nm and a length of 500 to 1000 nm.
CNFs can be produced by known processes, including nanofibrillation treatments of cellulose fibers and biosynthesis using bacteria such as acetic bacteria. The nanofibrillation treatments include physical processes, such as a treatment in a defibrator, e.g., a high-pressure homogenizer; chemical processes, such as an enzymatic treatment with, e.g., cellulase, and catalytic oxidation; and combinations of the physical and chemical processes.
Examples of the cellulose fibers as the starting material include wood pulp, such as softwood pulp and hardwood pulp; cotton pulp, such as cotton linter and cotton lint; non-wood pulp, such as straw pulp and bagasse pulp; and other natural cellulose fibers. They may be used either individually or as a combination of two or more thereof.
CNFs may have modified the hydroxyl groups on the cellulose molecular chains. Such modified CNFs include those having functional groups introduced to the cellulose hydroxy groups, such as those having their hydroxy group oxidized to carboxy group, esterified, or etherified. From the standpoint of improvement on dispersibility, it is preferable to use CNFs modified with an anionic group, namely anionically modified CNFs. Examples of the anionic group of the anionically modified CNFs include aldehyde, carboxy, sulfate, and phosphate. Carboxy and phosphate groups are preferred for achieving higher nanofibrillation.

Anionically modified CNFs can be obtained by known processes, such as oxidation of the hydroxy group of cellulose to an anionic group or reaction of the hydroxy group of cellulose with at least one of an anionic group-containing compound and its acid anhydride and derivatives. For example, the hydroxy group of cellulose may be oxidized with an oxidizer, such as sodium hypochlorite, and a bromide, such as sodium bromide, in the presence of 2,2,6,6-tetramethyl-1-piperidine-N-oxyl (TEMPO) as a catalyst (see JP 2011-140632A).

The water-soluble polymer is a polymer capable of dissolving in water and having solubility of at least 0.5 g in 100 g of 25°C water. The water solubility can be determined as follows. A prescribed amount of a substance being tested is put in a 100 ml glass beaker (diameter: 5 mm) containing 50 ml of ion-exchanged water at 25°C. The contents of the beaker are stirred using a 7 mm wide, 20 mm long stirrer tip and a magnetic stirrer HPS-100 (from As One Corp.) at 600 rpm, and it is checked whether all the substance dissolves in water within 24 hours. The test is conducted using varied amounts of the substance. The solubility is the value obtained by doubling the greatest amount of the substance that completely dissolves. The solubility is preferably 1 g or more, more preferably 5 g or more, even more preferably 10 g or more.

To improve the fluid retentivity of the absorbent composition, the water-soluble polymer preferably has a viscosity of 5000 mPa·s or higher, more preferably 6000 mPa·s or higher, even more preferably 7500 mPa·s or higher, preferably 30000 mPa·s or less, more preferably 20000 mPa·s or less, even more preferably 15000 mPa s or more, and preferably 5000 to 30000 mPa·s, more preferably 6000 to 20000 mPa·s, even more preferably 7500 to 15000 mPa·s, in a 1 mass% aqueous solution at 25°C. The viscosity of the water-soluble polymer in a 1 mass% aqueous solution at 25°C is measured using a Brookfield viscometer TVB-10 from Toki Sangyo Co., Ltd. equipped with a rotor No. 4 at 30 rpm for 60 seconds.

The water-soluble polymer is exemplified by cellulose derivatives, polyvinylpyrrolidone, polyvinyl alcohol, polyvinyl butyral, dextrin, polyethylene oxide, water-soluble nylons, and naturally-occurring polysaccharides. Examples of the naturally-occurring polysaccharides include sodium alginate, tragacanth gum, guar gum, xanthan gum, gum arabic, carrageenan, galactomannan, gelatin, casein, albumin, and pullulan. These water-soluble polymers may be used either individually or in combination thereof.

The water-soluble polymer is preferably a cellulose derivative or a salt thereof with a view to enhancing the dispersibility of CNF in water. A cellulose derivative or a salt thereof is a partially modified cellulose, including carboxymethyl cellulose, carboxyethyl cellulose, methyl cellulose, hydroxypropyl cellulose, hydroxypropylmethyl cellulose, hydroxyethyl cellulose, and their salts. The salt is preferably a water-soluble one, including at least one metal salt selected from an alkali metal salt, such as a sodium or potassium salt, and an alkaline earth metal salt, such as a calcium or magnesium salt. The absorbent composition may contain one of, or a combination of two or more of, these cellulose derivatives. From the viewpoint of effective prevention of CNFs aggregation, the cellulose derivative is preferably at least one compound selected from the group consisting of carboxymethyl cellulose, carboxyethyl cellulose, carboxymethyl cellulose salts, and carboxyethyl cellulose salts.

With a view to improving fluid retentivity of the absorbent composition, the cellulose derivative preferably has a degree of etherification of 1.0 or lower, more preferably 0.9 or lower, even more preferably 0.8 or lower, preferably 0.4 or higher, more preferably 0.5 or higher, even more preferably 0.6 or higher, and specifically preferably 0.4 to 1.0, more preferably 0.4 to 0.9, even more preferably 0.6 to 0.8. With the same view, the degree of etherification of the cellulose derivative salt is preferably in the same range as recited. The degree of etherification can be determined by the following method.

Determination of degree of etherification:

The degree of etherification can be determined by the ashing method. A precisely weighed quantity (ca. 0.7 g) of a sample (a cellulose derivative or its salt) is wrapped in filter paper, put in a magnetic crucible, and thoroughly ashed at 600°C. After cooling, the ash is transferred to a 500 mL beaker, about 250 mL of water and 35 mL of 0.05 mol/L sulfuric acid are added thereto in that order, and the mixture is boiled for 30 minutes. After cooling, a phenolphthalein indicator is added, and the excess acid is determined by back titration with 0.1 mol/L potassium hydroxide. The degree of etherification is calculated by formula:

$$\text{Degree of etherification} = 162 \times A/(10000 - 80 \times A)$$

where A is the amount (mL) of 0.05 mol/L sulfuric acid consumed by bound alkali in 1 g of the sample.

The CNFs and the water-soluble polymer are separable from the absorbent composition by filtration. The filtration can be carried out as follows. The absorbent composition containing CNFs and the water-soluble polymer is diluted to a 0.1 mass% concentration with ion-exchanged water. The diluted aqueous solution is filtered by centrifugation at 12,000 $\times$g for 10 minutes through a 0.5 $\mu$m polytetrafluoroethylene filter. CNFs build up on the filter, while the water-soluble polymer passes through the filter. CNFs and the water-soluble polymer can thus be separated from each other.

The characteristics of the water-soluble polymer used in the absorbent composition, such as viscosity and degree of etherification (of the cellulose derivative), can be determined using the water-soluble polymer (or the cellulose derivative) as separated from the absorbent composition.

The absorbent composition of the invention has a specific surface area of at least 1.0 $m^2$/g, preferably 5.0 $m^2$/g or more, more preferably 10.0 $m^2$/g or more, even more preferably 15.0 $m^2$/g or more. From a production perspective, the specific surface area is preferably 200 $m^2$/g or less, more preferably 150 $m^2$/g or less, even more preferably 100 $m^2$/g or less, still more preferably 50 $m^2$/g or less. The specific surface area can be calculated from adsorption isotherm data obtained using a nitrogen adsorption analyzer (e.g., Belsorp II from Bel Japan, Inc.).

The inventors have extensively studied the fluid retentivity of CNF and found, as a result, that an absorbent composition containing CNF and a water-soluble polymer, particularly a cellulose derivative, and having the above specified specific surface area exhibits excellent fluid retentivity. The absorbent composition is preferably used as an absorbent material of absorbent articles, such as diapers.

With a view to further improving the fluid retentivity, the ratio of the CNF content designated C1 to the water-soluble polymer content designated C2 in the absorbent composition, i.e., C1:C2, is preferably 1:0.5 to 1:20, more preferably 1:0.8 to 1:15, even more preferably 1:1 to 1:10. Throughout the description, all the contents are based on mass unless otherwise noted. When the absorbent composition contains two or more water-soluble polymers, C2 is the total content of the water-soluble polymers. The C1 to C2 ratio can be adjusted to fall in the above range by adjusting the contents of CNF and the water-soluble polymer in the mixed solution hereinafter described.

With a view to further improving dispersibility of CNF in water, the cellulose derivative preferably has a mass average molecular weight Mw of 5,000 to 1,000,000, more preferably 10,000 to 800,000, even more preferably 100,000 to 600,000. The mass average molecular weight can be determined by common gel permeation chromatography using, for example, HLC-8020 from Tosoh Corp. The columns used in the determination are chosen as appropriate to the predicted mass average molecular wight and ionic properties.

In order to increase the absorption rate thereby to improve fluid retentivity, CNF preferably has the following characteristics. The average length of CNFs is preferably 500 nm or larger, more preferably 5,000 nm or larger, preferably 1,000 nm or smaller, more preferably 3,000 nm or smaller, and specifically preferably 500 to 5,000 nm, more preferably 1,000 to 3,000 nm. The average diameter of CNFs is preferably 3 nm or larger, more preferably 5 nm or larger, preferably 300 nm or smaller, more preferably 100 nm or smaller, and specifically preferably 3 to 300 nm, more preferably 5 to 100 nm.

The average length and diameter of CNFs may be measured as follows. Water or ethanol is added to the absorbent composition having a solids concentration of 0.0001 mass% to prepare a dispersion. The dispersion is dispensed by drops onto mica and dried to make a sample to be observed. Lengths and diameters of at least five randomly chosen CNFs were measured under an atomic force microscope (Nanoscope III Tapping mode AFM, from Digital Instrument) using Point Probe NCH, from Nanosensors.

With the view of improving the fluid retentivity, the CNFs preferably have an average aspect ratio (length to diameter ratio) of 50 to 2,500, more preferably 75 to 2,000, even more preferably 100 to 1,500.

The absorbent composition may contain optional components other than the CNFs and cellulose derivative. Examples of useful optional components include fillers, pigments, dyes, fragrances, preservatives, antioxidants, deodorants, and antimicrobials. The content of any optional component, if added, in the absorbent composition is preferably not more than 10 mass%, more preferably 5 mass% or less. When two or more optional components are added, their total content is preferably within the above range.

The absorbent composition is a solid formed by drying. It is used as a dry solid in, for example, granular, powder, flaky, fibrous, or porous form. The absorbent composition can have its specific surface area adjusted by granulation, grinding, or other processing. The absorbent composition is preferably a granular, flaky, or porous dry solid so as to have an increased specific surface area. From the viewpoint of handling as an absorbent material, the water content of the absorbent composition is preferably not more than 15 mass%, more preferably 10 mass% or less.

When the absorbent composition is in flaky form, the thickness of the absorbent composition is preferably 0.1 to 100 $\mu$m, more preferably 1 to 50 $\mu$m, even more preferably 3 to 10 $\mu$m. The thickness of the absorbent composition is defined to be an average thickness of at least 10 randomly chosen flakes.

When the absorbent composition is in powder form, the absorbent composition preferably has an average particle size of 100 to 500 $\mu$m, more preferably 200 to 400 $\mu$m, with a view to increasing the water absorption capacity. The particle size is defined to be the maximum length of a particle, which can be measured by, for example, sieve classification, dynamic light scattering, or laser diffraction.

The absorbent composition is preferably capable of absorbing and retaining at least 10 times, more preferably 15 or more times, even more preferably 20 or more times, still more preferably 30 or more times, its own weight in artificial urine. Although there is no upper limit for artificial urine absorption and retention capacity, the upper limit would generally be 150 times its own weight. The amount of artificial urine that can be absorbed and retained by the absorbent composition is obtained as a maximum liquid retention capacity determined in the method for evaluating gelation in Examples hereinafter given. The composition of the artificial urine will be described later.

As stated earlier, the absorbent composition of the present invention is preferably used as an absorbent material of absorbent articles, such as diapers. Absorbent articles are used chiefly for the absorption and containment of bodily fluids, such as urine and menstrual blood, including disposable diapers, sanitary napkins, incontinence pads, and panty liners. Applicable absorbent articles are not limited to those listed above and broadly include any articles used to absorb discharged bodily fluids. An absorbent article is typically composed of a topsheet, a backsheet, and a fluid retentive absorbent member interposed between the topsheet and backsheet. The absorbent member is a main member for fluid absorption and contains an absorbent material. The absorbent article may further include other various members depending on the intended use as is known to those skilled in the art.

The method for producing the absorbent composition of the present invention will then be described on the basis of its preferred embodiments. The method of the present invention includes mixing the above-described CNFs and water-soluble polymer in a liquid containing a dispersing medium, such as water (mixing step), and drying the resulting mixed solution (drying step).

The CNF and water-soluble polymer used to produce the absorbent composition in the method of the present invention may be commercially available products. Examples of commercial CNF products include Rheocrysta from DKS Co., Ltd., BiNFi-S from Sugino Machine Ltd., and Celish from Daicel FineChem Ltd. CNFs are generally sold in the form of an aqueous dispersion. Examples of commercially available cellulose derivative products used as a water-soluble polymer include Cellogen and BSH-12 both from DKS Co., Ltd., CEKOL from Sansho Co., Ltd., and CMC Daicel from Daicel FineChem.

In the method of the present invention, the above-described CNF and water-soluble polymer are used. The CNF is used in the form dispersed in a medium, such as water, namely in dispersion form.

In the mixing step, a CNF dispersion and the cellulose derivative are mixed to prepare a mixed solution. Water or an alcoholic medium may be added to the mixing system. Examples of the alcoholic medium include monohydric alcohols, such as ethanol, 2-propyl alcohol, methanol, and butanol; ketones, such as acetone, methyl ethyl ketone, methyl isobutyl ketone, and cyclohexanone; and esters, such as ethyl acetate and butyl acetate.

To facilitate the mixing, the CNF content in the mixed solution is preferably 0.1 mass% or higher, more preferably 0.2 mass% or higher, preferably 1 mass% or lower, more preferably 0.8 mass% or lower, and specifically preferably 0.1 to 1 mass%, more preferably 0.2 to 0.8 mass%. For the same purpose, the water-soluble polymer content in the mixed solution is preferably 0.1 mass% or higher, more preferably 0.2 mass% or higher, preferably 1 mass% or lower, more preferably 0.8 mass% or lower, and specifically preferably 0.1 to 1 mass%, more preferably 0.2 to 0.8 mass%.

The CNF to water-soluble polymer ratio in the mixed solution is preferably adjusted so that the CNF content to water-soluble polymer content ratio in the absorbent composition, i.e., C1:C2, may fall in the above recited range.

With a view to uniformly dispersing the CNFs and cellulose derivative in the mixed solution, the dispersing medium is preferably mainly composed of water. Specifically, the medium preferably has a water content of at least 80 mass%, more preferably 90 mass% or higher, preferably lower than 100 mass%, and specifically preferably 80 mass% or less to less than 100 mass%, more preferably 90 to less than 100 mass%.

In the mixing step the CNFs and water-soluble polymer are dissolved in a dispersing medium to prepare a mixed solution. The process of dissolving, i.e., dispersing the CNFs and water-soluble polymer in a medium is not particularly restricted, and any known dispersing process may be adopted, including shear mixing, ultrasonication, high-pressure jet treatment, shaking, and a combination thereof. Shear mixing may be achieved using shear apparatuses, such as a stirring machine. Ultrasonication may be carried out using ultrasonic processors, such as an ultrasonic homogenizer. High-pressure jet treatment may be performed with high-pressure jet dispersing machines, such as a pressure homogenizer. Shaking may be conducted in a paint shaker and the like. The mixing step may be carried out at room temperature (25°C), or the mixing tank may be heated up to about 40°C.

The order of dispersing the CNFs and the water-soluble polymer in the medium is not critical. The CNFs may be dispersed first, and the water-soluble polymer may be dispersed in the resulting dispersion, or *vice versa.* The CNFs and the waster-soluble polymer may be added simultaneously into a mixing tank containing a dispersing medium.

The drying step is to dry the mixed solution to give an absorbent composition. Any drying process may be used as long as the qualities of the absorbent composition may be maintained. For example, the drying step can be achieved by hot air drying, heat drying, vacuum freeze drying, freeze drying, spray drying, or a combination thereof.

The absorbent composition is obtainable in the form of dry solid of various shapes, such as sheet and powder, depending on the drying process adopted. In making the absorbent composition in flaky form, a dry solid in sheet form is preferably cut into 1 to 3 mm squares in view of improved handling as an absorbent material.

In order to produce the absorbent composition with ease, the drying step is preferably carried out by freeze drying. To ensure the ease of production, the freeze drying is preferably performed at a freezing temperature of -20°C or lower, more preferably -50°C or lower. The lower limit of the freezing temperature, while not limited, is preferably -100°C from a manufacturing standpoint. The pressure in the freeze drying can be selected according to the freezing temperature.

The method of the present invention preferably further includes a grinding step in which the absorbent composition obtained in the drying step is ground. The grinding step is effective in adjusting the specific surface area to be within the above range particularly in preparing the absorbent composition by a method other than freeze drying. In the grinding step the absorbent composition is dry ground. Apparatuses used to conduct dry grinding include container-driven media mills, such as roller mills, tumbling ball mills, vibration ball mills, vibration rod mills, vibration tube mills, planetary ball mills, and centrifugal fluidizing mills; stirred media mills, such as tower mills, stirrer mills, continuous flow mills, and annular mills; compaction shear mills, such as high-speed centrifugal roller mills and Angmill; mortars, stone mills, masscolloiders, fret mills, edge runner mills, knife mills, pin mills, cutter mills, and hammer mills. Where needed, the ground absorbent composition may be classified by sieving or screening to a desired particle size.

When the above-described optional components are incorporated into the absorbent composition, the optional components may be added to the mixed solution in the mixing step or the absorbent composition obtained in the drying step.

While the present invention has been described with particular reference to preferred embodiments thereof, it should be understood that the present invention is not construed as being limited to these embodiments, and various changes and modifications can be added thereto without departing from the spirit and scope of the present invention.

The following clauses are further illustrative of the embodiments of the absorbent composition and the method of producing the same disclosed herein.

1. An absorbent composition containing cellulose nanofibers and a water-soluble polymer and having a specific surface area of at least 1.0 m$^2$/g.

2. The absorbent composition according to clause 1, having a specific surface area of 5.0 m$^2$/g or more, preferably 10.0 m$^2$/g or more, more preferably 15.0 m$^2$/g or more, and 200 m$^2$/g or less, preferably 150 m$^2$/g or less, more preferably 100 m$^2$/g or less, even more preferably 50 m$^2$/g or less.

3. The absorbent composition according to clause 1 or 2, having a specific surface area of 200 m$^2$/g or less, preferably 150 m$^2$/g or less, more preferably 100 m$^2$/g or less, even more preferably 50 m$^2$/g or less.

4. The absorbent composition according to clause 1, having a specific surface area of 1.0 to 200 m$^2$/g, preferably 5.0 to 150 m$^2$/g, more preferably 10.0 to 100 m$^2$/g, even more preferably 15.0 to 50 m$^2$/g.

5. The absorbent composition according to any one of clauses 1 to 4, wherein the water-soluble polymer has a viscosity of 5,000 mPa·s or higher, preferably 5,000 to 30,000 mPa·s, more preferably 6,000 to 20,000 mPa·s, more preferably 7,500 to 15.000 mPa·s, in a 1 mass% aqueous solution at 25°C.

6. The absorbent composition according to any one of clauses 1 to 5, wherein the water-soluble polymer is a cellulose derivative or its salt.

7. The absorbent composition according to clause 6, wherein the cellulose derivative or its salt is at least one compound selected from the group consisting of carboxymethyl cellulose, carboxyethyl cellulose, methyl cellulose, hydroxypropyl cellulose, hydroxypropylmethyl cellulose, hydroxyethyl cellulose, and their salts.

8. The absorbent composition according to clauses 6 or 7, wherein the cellulose derivative has a degree of etherification of 1.0 or lower, preferably 0.4 to 1.0, more preferably 0.4 to 0.9, even more preferably 0.6 to 0.8.

9. The absorbent composition according to any one of clauses 1 to 8, having a ratio of the cellulose nanofibers content designated C1 to the water-soluble polymer content designated C2, i.e., C1:C2, of 1:0.5 to 1:20, preferably 1:0.8 to 1:15, more preferably 1:1 to 1:10.

10. A method for producing the absorbent composition according to any one of clauses 1 to 9, including mixing the cellulose nanofibers and the water-soluble polymer in a liquid and freeze-drying the resulting mixed solution.

Examples

The present invention will now be illustrated in greater detail with reference to Examples. It should be understood that the present invention is not limited thereto. Unless otherwise noted, all the percentages are by mass.

Example 1

An aqueous dispersion of carboxy-modified CNFs (Rheocrysta from DKS Co., Ltd.; CNF concentration: 2.5%) and sodium carboxymethyl cellulose (CMC-Na) (Cellogen MP-60 from DKS Co., Ltd.) were provided. The CNF aqueous dispersion, the CMC-Na, and ion exchanged water were mixed to prepare a CNF/CMC-Na mixed solution having a CNF content of 0.01% and a cellulose derivative content of 0.01%. A Teflon® sheet (TOMBO 9001 from Nichias Corp.) was placed over the top of a 280 mm × 200 mm × 20 mm (depth) metal plate, and about 50 mL of the mixed solution was poured thereon, dried in an electric dryer at 105°C for about 5 hours, and left to stand in a room temperature environment for about 30 minutes to form a dry film with an average thickness of 4.9 μm on the plate. The film was finely cut with scissors into square flakes of about 1.0 mm side. The flakes were passed through a sieve of 4 μm opening, and the undersize fraction was used as the absorbent composition of Example 1.

Example 2

A mixed solution was prepared in the same manner as in Example 1, except for changing the CNF and the cellulose derivative contents each to 0.4%. The mixed solution was put in a cylindrical stainless steel container of 72 mm in diameter and 53 mm in depth (available from Sansyo Co., Ltd.), frozen at -80°C for 1 hour using a deep freezer LAB-11 from Kanou Reiki Co., Ltd., and freeze-dried over a period of about 48 hours until completion of drying using a freeze-dryer FDU-1200 from Tokyo Rikakikai Co., Ltd. The resulting dried product was used as an absorbent composition of Example 2.

Examples 3 and 4

An absorbent composition of Example 3 was prepared in the same manner as in Example 1, except for using sodium carboxymethyl cellulose BSH-12 from DKS Co., Ltd. as a water-soluble polymer and changing the viscosity of the cellulose derivative in a 1% aqueous solution at 25°C as shown in Table 1. The dry film formed in the course of the preparation had an average thickness of 6.1 μm.
An absorbent composition of Example 4 was prepared in the same manner as in Example 2, except for using the cellulose derivative of Example 3.

Comparative Examples 1 and 2

An absorbent composition of Comparative Example 1 was prepared in the same manner as in Example 1, except for changing the CNF and the cellulose derivative contents in the mixed solution to be dried in an electric dryer each to 0.6%. As a result, the dry film obtained by the drying in an electric dryer had an average thickness of 15.2 μm, which was greater than the thickness of the sample obtained in Example 1. The resulting dried product, namely the absorbent composition had a smaller specific surface area than that of Example 1 as shown in Table 1.
An absorbent composition of Comparative Example 2 was prepared in the same manner as in Comparative Example 1, except for using the cellulose derivative of Example 3. The dry film formed in the course of the preparation had an average thickness of 17.8 μm.

Reference Example

Sodium polyacrylate was used as an absorbent composition. This polymer was used as an absorbent polymer in Merries Pants manufactured by Kao Corp. in 2018.
The specific surface area of each absorbent composition obtained in Examples, Comparative Examples, and Reference Example and the viscosity (1% aqueous solution, 25°C) and the degree of etherification of the cellulose derivative used in each absorbent composition were determined by the above-described methods. The results are shown in Table 1 below. The CNF content C1 to cellulose derivative content C2 ratio, C1:C2, of each absorbent composition is also shown in Table 1.

Evaluation of gelation

A 0.03 g portion of each absorbent composition was put in a 20 mL vial (screw type, from Maruemu Corp.), and a predetermined amount of artificial urine was added thereto. The artificial urine was composed of 1.940% urea, 0.795% sodium chloride, 0.111% magnesium sulfate, 0.062% calcium chloride, 0.198% potassium sulfate, Red No. 2 (dye) 0.005%, 96.882% water, and 0.007% polyoxyethylene lauryl ether and had a surface tension adjusted to $53\pm1$ dyne/cm (23°C). The vial was shaken by hand for 5 seconds with its cap up to mix up the contents. After it was checked visually whether gelation occurred, shaking was continued while visually checking the progress of gelation for every 10 seconds. The contents of the vial were determined to have gelled when part of the contents did not drop down in 30 seconds with the vial kept vertical with the cap down. The time from the addition of artificial urine to gelation was subtracted by 30 seconds, the time required for visually checking gelation, was defined to be a gelation time. A sample that did not gel in 60 minutes from the start of shaking was determined to be incapable of gelling. The above test procedure was performed for a varied amount of artificial urine, varied from 17 times, 33 times, 50 times, 66 times, to 80 times (2.4 g) the own weight of the absorbent composition. Even for those samples that did not gel after 60 minutes from the start of shaking, a maximum liquid retention capacity of the absorbent composition was measured. Specifically, the vial was held upside down, and the amount of the liquid having dripped down from the vial was measured. The measured amount of the liquid was subtracted from the amount of artificial urine added to the vial before shaking to give the maximum liquid retention capacity of the absorbent composition. The maximum liquid retention capacity was expressed in ratio to the own weight of the absorbent composition (the number of times the own weight of the absorbent composition). The gelation, gelation time, and maximum liquid retention capacity of each sample are shown in Table 1.

Table 1

|  |  | Example | | | | Comp. Example | | Ref. Example |
| --- | --- | --- | --- | --- | --- | --- | --- | --- |
|  |  | 1 | 2 | 3 | 4 | 1 | 2 |  |
| Absorbent Composition | Cellulose Derivative, Viscosity (mPa·s) | 8000 | | 6500 | | 8500 | 6500 | - |
|  | Cellulose Derivative, Degree of Etherification | 0.7 | | | | 0.7 | | - |
|  | C1:C2* | 1:1 | 1:1 | 1:1 | 1:1 | 1:1 | 1:1 | - |
|  | Absorbent Composition, Specific Surface Area (m$^2$/g) | 1.53 | 19.88 | 2.34 | 14.81 | 0.45 | 0.72 | 0.62 |
| 17 Times the Own Weight | Gelation | yes | yes | yes | yes | yes | yes | yes |
|  | Gelation Time (sec) | 20 | 10 | 10 | 10 | 20 | 30 | 40 |
| 33 Times the Own Weight | Gelation | yes | yes | yes | yes | no | no | yes |
|  | Gelation Time (sec) | 780 | 20 | 2200 | 20 | - | - | 160 |
| 50 Times the Own Weight | Gelation | no | yes | no | yes | - | - | no |
|  | Gelation Time (sec) | - | 20 | - | 470 | - | - | - |
| 66 Times the Own Weight | Gelation | - | yes | - | no | - | - | - |
|  | Gelation Time (sec) | - | 1800 | - | - | - | - | - |
| 80 Times the Own Weight | Gelation | - | no | - | - | - | - | - |
|  | Gelation Time (sec) | - | - | - | - | - | - | - |
| Maximum Liquid Retention Capacity (time) | | 41 | 66 | 36 | 50 | 27 | 26 | 47 |
| *: Ratio of CNF content (C1) to cellulose derivative content (C2) | | | | | | | | |

As is apparent from the results in Table 1, the absorbent compositions of Examples 1 through 4 were capable of gelling 33 or more times their own weight of artificial urine. That is, the absorbent compositions of Examples 1 to 4 were capable of absorbing and retaining 33 or more times their own weight of water. Such high performance is believed to be due to the high dispersibility and high contact efficiency of CNF in and with water in the absorbent compositions. Thus, the absorbent compositions of Examples 1 to 4 are proved by the results in Table 1 to have sufficient absorption performance as an absorbent material for use in absorbent articles, such as diapers. The results of Examples 1 to 4 also prove that increasing the specific surface area of the absorbent composition is effective in improving the fluid retentivity. In particular, the absorbent composition with a specific surface area of 14 m$^2$/g or larger exhibits higher fluid retentivity than the absorbent polymer of Reference Example.

When the absorbent composition of Example 2 was mixed with 80 times the own weight of water and checked for gelation, the contents of the vial, i.e., the mixture of the absorbent composition and water turned into a sol and entirely dropped from the vial kept upside down. The same phenomenon was observed when the absorbent composition of Example 4 was mixed with 50 times the own weight of water. Separation of water from the absorbent composition/water mixture did not occur in these samples, so that the amount of the liquid having dripped down from the vial was unmeasurable. Therefore, the maximum liquid retention capacities of the samples of Examples 2 and 4 shown in Table 1 are the respective amounts of water added with which gelation occurred in the gelation test, i.e., 66 and 80 times the own weight of the respective absorbent compositions.

Industrial Applicability

The absorbent composition of the present invention has excellent fluid retentivity. The method of the present invention allows for producing the absorbent composition having excellent fluid retentivity.

**Claims**

1.  An absorbent composition comprising cellulose nanofibers and a water-soluble polymer and having a specific surface area of at least 1.0 $m^2/g$.

2.  The absorbent composition according to claim 1, having a specific surface area of 5.0 $m^2/g$ or more.

3.  The absorbent composition according to claim 1 or 2, having a specific surface area of 200 $m^2/g$ or less.

4.  The absorbent composition according to claim 1, having a specific surface area of 1.0 to 200 $m^2/g$.

5.  The absorbent composition according to any one of claims 1 to 4, wherein the water-soluble polymer has a viscosity of 5,000 mPa·s or higher in a 1 mass% aqueous solution at 25°C.

6.  The absorbent composition according to any one of claims 1 to 5, wherein the water-soluble polymer is a cellulose derivative or its salt.

7.  The absorbent composition according to claim 6, wherein the cellulose derivative or its salt is at least one compound selected from the group consisting of carboxymethyl cellulose, carboxyethyl cellulose, methyl cellulose, hydroxypropyl cellulose, hydroxypropylmethyl cellulose, hydroxyethyl cellulose, and their salts.

8.  The absorbent composition according to claim 6 or 7, wherein the cellulose derivative has a degree of etherification of 1.0 or lower.

9.  The absorbent composition according to any one of claims 1 to 8, having a ratio of the cellulose nanofibers content designated C1 to the water-soluble polymer content designated C2, i.e., C1:C2, of 1:0.5 to 1:20.

10. A method for producing the absorbent composition according to any one of claims 1 to 9, comprising mixing the cellulose nanofibers and the water-soluble polymer in a liquid and freeze-drying the resulting mixed solution.

| INTERNATIONAL SEARCH REPORT | International application No. |
|---|---|
| | PCT/JP2020/033674 |

**A. CLASSIFICATION OF SUBJECT MATTER**
C08J 3/215(2006.01)i; C08L 1/02(2006.01)i; C08L 101/14(2006.01)i
FI: C08L101/14; C08L1/02; C08J3/215 CEP

According to International Patent Classification (IPC) or to both national classification and IPC

**B. FIELDS SEARCHED**

Minimum documentation searched (classification system followed by classification symbols)
C08J3/215; C08L1/00-101/16

| Documentation searched other than minimum documentation to the extent that such documents are included in the fields searched | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2000-503704 A (RHODIA CHIMIE) 28 March 2000 (2000-03-28) claims, page 21, line 15 to page 22, line 12, examples 4-6 | 1-8,10<br>9 |
| X<br>A | CN 103275336 A (TIANJIN UNIVERSITY OF SCIENCE & TECHNOLOGY) 04 September 2013 (2013-09-04) claims, example 2 | 1-5<br>6-10 |
| X<br>A | WO 2018/109281 A1 (UPM-KYMMENE CORPORATION) 21 June 2018 (2018-06-21) claims, examples | 1-5,10<br>6-9 |
| X<br>A | JP 2017-210596 A (STARLITE CO., LTD.) 30 November 2017 (2017-11-30) claims, examples | 1-5,10<br>6-9 |

☒ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 November 2020 (11.11.2020) | 24 November 2020 (24.11.2020) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**

| International application No. |
|---|
| PCT/JP2020/033674 |

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | JP 2019-73661 A (STARLITE CO., LTD.) 16 May 2019 (2019-05-16) claims, paragraph [0027], examples | 1-5,10<br>6-9 |
| X<br>A | WO 2015/107995 A1 (NIPPON PAPER INDUSTRIES CO., LTD.) 23 July 2015 (2015-07-23) claims, paragraphs [0029]-[0037], examples | 1-9<br>10 |
| X | WO 2009/069641 A1 (THE UNIVERSITY OF TOKYO) 04 June 2009 (2009-06-04) claims, paragraphs [0048]-[0050] | 1-10 |
| P,X | JP 2020-139089 A (KAO CORP.) 03 September 2020 (2020-09-03) claims, paragraphs [0013]-[0014], [0037], examples | 1-10 |

Form PCT/ISA/210 (continuation of second sheet) (January 2015)

**INTERNATIONAL SEARCH REPORT**
Information on patent family members

International application No.

PCT/JP2020/033674

| Patent Documents referred in the Report | Publication Date | Patent Family | Publication Date |
|---|---|---|---|
| JP 2000-503704 A | 28 Mar. 2000 | US 2001/0004869 A1 claims, paragraphs [0144]-[0152], examples 4-6 WO 1998/002487 A1 EP 912634 A1 | |
| CN 103275336 A | 04 Sep. 2013 | (Family: none) | |
| WO 2018/109281 A1 | 21 Jun. 2018 | JP 2020-501566 A claims, examples US 2020/0078305 A1 EP 3335695 A1 | |
| JP 2017-210596 A | 30 Nov. 2017 | WO 2017/141779 A1 claims, examples CN 108779256 A | |
| JP 2019-73661 A | 16 May 2019 | (Family: none) | |
| WO 2015/107995 A1 | 23 Jul. 2015 | US 2016/0333116 A1 claims, paragraphs [0040]-[0052], examples EP 3095815 A1 | |
| WO 2009/069641 A1 | 04 Jun. 2009 | US 2010/0233481 A1 claims, paragraphs [0092]-[0095] EP 2216345 A1 | |
| JP 2020-139089 A | 03 Sep. 2020 | (Family: none) | |

Form PCT/ISA/210 (patent family annex) (January 2015)

**EP 4 026 869 A1**

**REFERENCES CITED IN THE DESCRIPTION**

**Patent documents cited in the description**

- JP 2010215872 A
- US 20150093560 A
- US 20160333116 A
- JP 2011140632 A